# EUROPÄISCHE PATENTSCHRIFT

(11) **EP 4 177 188 B1**
(45) Veröffentlichungstag und Bekanntmachung des Hinweises auf die Patenterteilung: **06.08.2025**
(21) Anmeldenummer: 22206020.4
(22) Anmeldetag: 08.11.2022
(51) Int. Cl.: B65G 1/14

(54) **STAPELSÄULE, PUFFERSYSTEM MIT STAPELSÄULE UND VERFAHREN ZUM ANPASSEN EINES PUFFERSYSTEMS**
STACKING COLUMN, BUFFER SYSTEM WITH STACKING COLUMN AND METHOD FOR ADAPTING A BUFFER SYSTEM
COLONNE D'EMPILEMENT, SYSTÈME TAMPON À COLONNE D'EMPILEMENT ET PROCÉDÉ D'ADAPTATION D'UN SYSTÈME TAMPON

(30) Priorität: 09.11.2021 DE 102021212591
(43) Veröffentlichungstag der Anmeldung: 10.05.2023
(73) Patentinhaber: thyssenkrupp Automotive Body Solutions GmbH, 74076 Heilbronn (DE); thyssenkrupp AG, 45143 Essen (DE)
(72) Erfinder: Fuchs, German, 66646 Marpingen (DE); Doering, Dominic, 66589 Merchweiler (DE)
(74) Vertreter: thyssenkrupp Intellectual Property GmbH

(56) Entgegenhaltungen:
- EP-A2- 2 305 580
- WO-A1-03/035517
- CN-A- 102 581 833
- DE-A1- 102005 025 813
- DE-A1- 102010 015 512
- DE-B3- 10 320 566
- US-A- 5 005 712

## Beschreibung

Die Erfindung betrifft eine Stapelsäule mit einem Klinkenträger und einer Mehrzahl von in definierten Abständen aufeinanderfolgend angeordneten Klinken, wobei die Klinken derart zwischen einer ersten Seitenwange und einer zweiten Seitenwange des Klinkenträgers um eine erste Drehachse verschwenkbar angeordnet sind, dass die Klinken jeweils eine Ruhestellung, eine Bereitschaftsstellung und eine Arbeitsstellung einnehmen können. In der Ruhestellung ist dabei ein Aufnahmeabschnitt einer Klinke vollständig in dem Klinkenträger angeordnet, in der Bereitschaftsstellung ragt der Aufnahmeabschnitt teilweise aus dem Klinkenträger zur Aufnahme eines Lagerguts heraus und in der Arbeitsstellung ragt der Aufnahmeabschnitt vollständig aus dem Klinkenträger zum Halten eines Lagerguts heraus.

Des Weiteren betrifft die Erfindung ein Puffersystem, das zumindest zwei solcher Stapelsäulen zum Halten von Lagergut umfasst, und ein Verfahren zum Anpassen eines solchen Puffersystems an veränderte Lagerbedingungen.

Im Stand der Technik sind vielfältige Ausführungsformen von Stapelsäulen und Puffersystemen mit Stapelsäulen bekannt, wobei bei bekannten Puffersystem häufig mehrere senkrecht stehende Stapelsäulen zu einem Viereck angeordnet sind. Je nachdem, wie ein Lagergut gelagert werden soll, sind aber auch Puffersysteme bekannt, bei denen die Stapelsäulen horizontal oder schräg angeordnet sind. Die Puffersysteme mit den Stapelsäulen funktionieren dabei nach dem LIFO-Prinzip (LIFO: Last in - First out). Bei einem beladungsfreien Puffersystem mit senkrecht stehenden Stapelsäulen befindet sich dabei die jeweils unterste Klinke einer jeden Stapelsäule in einer Bereitschaftsstellung, in der ein Lagergut von einem Aufnahmeabschnitt der untersten Klinken zur Lagerung aufgenommen werden kann. Beim Aufnehmen eines Lagerguts werden die entsprechenden Klinken dann von der Bereitschaftsstellung in die Arbeitsstellung verbracht, in der das Lagergut auf den Aufnahmeabschnitt der Klinken aufliegt. Durch das Verbringen der von der Bereitschaftsstellung in die Arbeitsstellung wird die nachfolgende Klinke einer jeden Säule, also die nächst höher gelegene Klinke von der Ruhestellung in die Bereitschaftsstellung gebracht, sodass diese Klinken nun ein weiteres Lagergut aufnehmen können. Wird hingegen ein Lagergut aus dem Puffersystem entnommen, so kehren die Klinken, auf deren Aufnahmeabschnitt das entnommene Lagergut geruht hat, von der Arbeitsstellung in die Bereitschaftsstellung zurück und die nächst höher gelegene Klinke einer jeden Stapelsäule kehrt von der Bereitschaftsstellung in die Ruhestellung zurück.

Damit dieser Wechsel zwischen den unterschiedlichen Stellungen der Klinken erfolgen kann, werden bei vielen Stapelsäulen geschlossene Verkettungen beziehungsweise Verbindungen der einzelnen Klinken eingesetzt, sodass alle Klinken miteinander mechanisch verbunden sind und über die Verkettung beziehungsweise die mechanische Verbindung der Wechsel der Stellung einer nachfolgenden Klinke beim Be- oder Entladen einer Klinke erfolgt. Eine solche Stapelsäule ist beispielsweise aus der DE 20 2020 104 669 U1 bekannt.

Nachteilig bei solchen Stapelsäulen ist, dass es nicht möglich ist, eine einzelne Klinke im Schadensfall zu tauschen. Hier muss regelmäßig aufwendig die komplette Klinkenkette ausgebaut und demontiert und nach Austausch der Einzelklinke wieder montiert werden. Darüber hinaus sind aus der DE 10 2016 106 587 A1 Stapelsäulen bekannt, bei denen Federelemente auf die Klinken wirken, um die Klinken sowohl in der Ruhelage als auch in der Gebrauchslage zu halten. Diese Federelemente erhöhen allerdings den Montageaufwand und unterliegen einem Verschleiß.

Aus der EP 1 648 801 B1 ist ferner eine Stapelsäule bekannt, bei der die Klinken aus einem Blechzuschnitt bestehen und von dem Blechzuschnitt ein Steuerarm abgekantet ist, der beim Wechsel der Stellung der Klinke auf die nachfolgende Klinke einwirkt. Problematisch ist, dass eine solche Stapelsäule nicht beliebig skalierbar ist. Insbesondere lässt diese Klinkenausgestaltung es nicht ohne Weiteres zu, die Abstände zwischen aufeinanderfolgenden Klinken beliebig zu variieren.

WO 03/035517 A1 offenbart eine Stapelsäule gemäß dem Oberbegriff des Anspruchs 1.

Vor diesem Hintergrund ist es eine Aufgabe der vorliegenden Erfindung, eine verbesserte Stapelsäule und damit auch ein verbessertes Puffersystem bereitzustellen. Insbesondere soll die Stapelsäule bei Beschädigung einer Klinke einfacher zu reparieren sein. Vorteilhafterweise ist die Stapelsäule zudem auf einfache Weise an unterschiedlich benötigte Klinkenabstände anpassbar. Zur Lösung dieser Aufgabe werden eine Stapelsäule, ein Puffersystem sowie ein Verfahren zum Anpassen eines Puffersystems gemäß den unabhängigen Ansprüchen vorgeschlagen. Weitere vorteilhafte Ausgestaltungen der Erfindung sind in den abhängigen Ansprüchen und der Beschreibung beschrieben sowie in den Figuren dargestellt.

Die vorgeschlagene Lösung sieht eine Stapelsäule vor, die einen Klinkenträger und eine Mehrzahl von in definierten Abständen aufeinanderfolgend angeordneten Klinken umfasst, wobei die Klinken derart zwischen einer ersten Seitenwange und einer zweiten Seitenwange des Klinkenträgers um eine erste Drehachse verschwenkbar angeordnet sind, dass die Klinken jeweils eine Ruhestellung, eine Bereitschaftsstellung und eine Arbeitsstellung einnehmen können. In der Ruhestellung ist ein Aufnahmeabschnitt einer Klinke dabei vollständig in dem Klinkenträger angeordnet, in der Bereitschaftsstellung ragt der Aufnahmeabschnitt teilweise aus dem Klinkenträger zur Aufnahme eines Lagerguts, insbesondere eines Karosseriebauteils, heraus, und in der Arbeitsstellung ragt der Aufnahmeabschnitt vollständig aus dem Klinkenträger zum Halten eines Lagerguts heraus. Erfindungsgemäß sind jeweils zwischen zwei aufeinanderfolgenden Klinken, insbesondere zwischen jeweils einer oberen Klinke und einer unteren Klinke der Stapelsäule, Hebelelemente, die jeweils einen ersten Hebelabschnitt und einen zweiten Hebelabschnitt aufweisen, zwischen der ersten Seitenwange und der zweiten Seitenwange derart um eine zweite Drehachse verschwenkbar angeordnet, dass eine Klinke der Stapelsäule, die von der Bereitschaftsstellung in die Arbeitsstellung verbracht wird, auf den ersten Hebelabschnitt eines nachfolgenden Hebelelements derart einwirkt, dass das nachfolgende Hebelelement eine Schwenkbewegung um die zweite Drehachse ausführt und das nachfolgende Hebelelement dabei mit dem zweiten Hebelabschnitt auf eine nachfolgende Klinke einwirkt, wodurch die nachfolgende Klinke aus der Ruhestellung in die Bereitschaftsstellung verbracht wird. Der vorgeschlagenen Lösung beruht dabei vorteilhafterweise auf einem mehrfach entkoppelt und gelagertem Hebelprinzip, bei dem die Einzelhebel, insbesondere durch ihre Bauform und/oder ihre Gewichtsauslegung und/oder ihren Drehpunkt, das End- und VorEinstellen der einzelnen Klinken beim Beladen der Klinken mit den zu stapelnden Bauteilen bewirken. Die Begrenzung der notwendigen Drehwinkel wird vorteilhafterweise über Anschläge und/oder über Formführungen in den Seitenwangen der Stapelsäule erreicht. Vorteilhafterweise ragen auch die Hebelelemente nicht aus dem Klinkenträger heraus, insbesondere auch nicht teilweise. Die Hebelelemente sind somit vorteilhafterweise vollständig in dem Klinkenträger angeordnet. Fehlbedienungen der Hebelelemente, insbesondere Fehlbedienungen durch versehentliches Berühren von einem Teil eines Hebelelementes, lassen sich so vorteilhafterweise vermeiden. Weiter vorteilhaft kann der Klinkenträger somit zudem zu drei Seiten verkleidet sein, wodurch vorteilhafterweise Verunreinigungen und damit verbundener Verschleiß reduziert werden können.

Vorteilhafterweise sind die die einzelnen Klinken der Stapelsäule miteinander unverbunden, das heißt, dass insbesondere keine mechanisch feste Verbindung zwischen den einzelnen Klinken besteht. Insbesondere sind die einzelnen Klinken nicht durch Ketten, Seilzüge oder sonstige Maschinenelemente miteinander verbunden. Hierdurch wird der Austausch einzelner Klinken im Schadensfall erleichtert, insbesondere da ein Lösen aus einer Klinkenkette und Einfügen in eine Klinkenkette entfällt. Zudem wird im Schadensfall aufgrund der Vereinzelung der Klinken der auftretende Schaden auf eine einzelne Klinke örtlich beschränkt, sodass ein Schaden schneller lokalisiert werden kann. Weiter vorteilhaft sind, insbesondere zur Steigerung der vorgenannten Vorteile, auch die Klinken und die Hebelelemente miteinander unverbunden, das heißt, dass vorteilhafterweise keine mechanisch feste Verbindung zwischen den Klinken und den Hebelelementen besteht. Eine Klinke oder ein Hebelelement kann also vorteilhafterweise der Stapelsäule entnommen werden, ohne dass eine Verbindung zwischen Klinke und Hebelelement dazu gelöst werden müsste.

Gemäß einer vorteilhaften Ausführungsform der Stapelsäule ist vorgesehen, dass in einem beladungsfreien Zustand alle Klinken der Stapelsäule bis auf eine an einem ersten Ende des Klinkenträgers angeordnete erste Klinke, bei einer senkrechten Stapelsäule insbesondere eine unterste Klinke am unteren Ende des Klinkenträgers, in der Ruhestellung sind und die erste Klinke in der Bereitschaftsstellung ist. Somit ist ein Beladen der ersten Klinke mit einem Lagergut, insbesondere mit einem Bauteil, im beladungsfreien Zustand ermöglicht. Die weiteren Klinken behindern dabei das Beladen der ersten Klinke nicht.

Eine weitere besonders vorteilhafte Ausgestaltung der Stapelsäule sieht vor, dass die Klinken einen Klinkengrundkörper umfassen. Eine vorteilhafte Ausführungsform sieht vor, dass an dem Klinkenkörper wenigstens ein weiteres Bauteil montiert ist, insbesondere wenigstens ein als Verschleißschutz dienendes Bauteil. Vorteilhafterweise ist es so möglich Lagergüter zu stapeln, die durch ihren Werkstoff und/oder ihre Beschaffenheit, beispielsweise ihren Grat, den Klinkenkörper im Dauerbetrieb zerstören könnten. Insbesondere sind als eine vorteilhafte Ausgestaltungsvariante plastisolbeschichtete Klinken vorgesehen. Gemäß einer weiteren vorteilhaften Ausgestaltungsvariante sind kunststoffumspritzte Klinken vorgesehen. Gemäß einer weiteren vorteilhaften Ausgestaltungsvariante ist eine Stapelsäule mit einer Zentralverriegelung der Klinken vorgesehen. Eine solche Zentralverriegelung ist insbesondere für Wartungs- und oder Transportzwecke vorteilhaft. Gemäß einer weiteren vorteilhaften Ausgestaltungsvariante ist eine Stapelsäule mit Mehrfachklinken, insbesondere mit Doppelklinken, also insbesondere mit zwei oder mehr nebeneinander angeordneten Klinken, vorgesehen, insbesondere um eine größere Auflagefläche zur realisieren. Die derart nebeneinander angeordneten Klinken sind dabei vorteilhafterweise derart miteinander gekoppelt, dass diese jeweils die gleiche Stellung einnehmen, wobei aber vorteilhafterweise nur eine der Klinken mit den Hebelelementen zusammenwirkt.

Gemäß der Erfindung ist an dem Klinkengrundkörper ein Masseelement angeordnet. Insbesondere ist dabei vorgesehen, dass der Klinkengrundkörper zumindest eine Seitenwange umfasst, wobei das Masseelement vorteilhafterweise an dieser Seitenwange angeordnet ist. Insbesondere ist das Masseelement zweiteilig ausgebildet, und dabei vorteilhafterweise rechts und links der Seitenwange angeordnet. Ferner ist insbesondere vorgesehen, dass das Masseelement dabei hinter der ersten Drehachse an dem Klinkengrundkörper angeordnet ist und die Aufnahmefläche vor der ersten Drehachse angeordnet ist.

Erfindungsgemäß ist das Masseelement derart ausgebildet und derart an dem Klinkengrundkörper angeordnet, dass das Masseelement die zugehörige Klinke in einem beladungsfreien Zustand in der Ruhestellung hält. Insbesondere bilden die Klinken der Stapelsäule also jeweils um die erste Drehachse einen zweiseitigen Hebel, wobei die Gewichtskraft des Masseelements überwunden werden muss, um die jeweilige Klinke aus der Ruhestellung in eine andere Stellung zu verbringen.

Weiter vorteilhaft ist vorgesehen, dass das Masseelement derart ausgebildet und derart an dem Klinkengrundkörper angeordnet ist, dass das Masseelement die zugehörige Klinke von der Arbeitsstellung in die Bereitschaftsstellung verbringt, wenn ein von dem Aufnahmeabschnitt gehaltenes Lagergut entfernt wird. Die Gewichtskraft des Masseelements verbringt also vorteilhafterweise eine nicht mehr belastete Klinke aus der Arbeitsstellung. Vorteilhafterweise verhindert dabei lediglich das der Klinke zugeordnete Hebelelement, dass die Klinke direkt durch die Gewichtskraft des Masseelements von der Arbeitsstellung in die Ruhestellung verbracht wird.

Weiter vorteilhaft ist das Masseelement derart ausgebildet und derart an dem Klinkengrundkörper angeordnet, dass das Masseelement die zugehörige Klinke von der Bereitschaftsstellung in die Ruhestellung verbringt, wenn ein von dem Aufnahmeabschnitt einer vorhergehenden Klinke gehaltenes Lagergut, bei einer senkrechten Stapelsäule ein von dem Aufnahmeabschnitt einer direkt unterhalb angeordneten Klinke gehaltenes Lagergut, entfernt wird. Insbesondere ist vorgesehen, dass durch das Verbringen der vorhergehenden Klinke aus der Arbeitsstellung in die Bereitschaftsstellung das auf die Klinke wirkende Hebelelement derart verschwenkt wird, dass dieses der Gewichtskraft des Masseelements nicht mehr entgegenwirkt.

Gemäß einer weiteren vorteilhaften Ausgestaltung ist vorgesehen, dass eine jeweilige Klinke, insbesondere der Klinkengrundkörper der jeweiligen Klinke oder das an dem Klinkengrundkörper angeordnete Masseelement, ein seitliches Stützelement umfasst. Das Stützelement ist dabei vorteilhafterweise einstückig mit dem Klinkenkörper ausgebildet, insbesondere durch entsprechende Formung eines Blechteils.

Vorteilhafterweise ist das Stützelement einer jeweiligen Klinke in einer Aussparung einer der Seitenwangen angeordnet ist. Vorteilhafterweise wird der Drehwinkel einer jeweiligen Klinke durch die Grenzen der Aussparung begrenzt, die insbesondere einen Anschlag für das Stützelement bilden, insbesondere wenn die Klinke in der Arbeitsstellung ist und wenn die Klinke in der Ruhestellung ist. Die Stapelsäule weist entsprechend eine Mehrzahl von Aussparungen in zumindest einer der Seitenwangen des Klinkenträgers auf, insbesondere entsprechend der Anzahl der Klinken. Die Aussparungen sind dabei insbesondere jeweils kreisbogenförmig ausgebildet, insbesondere als Kulissenführung. Die Aussparung und das Stützelement sind vorteilhafterweise derart aufeinander abgestimmt sind, dass die Aussparung ein Verschwenken einer Klinke über die Arbeitsstellung hinaus verhindert. Insbesondere bildet die Aussparung vorteilhafterweise für das Stützelement einen ersten Anschlag, der ein Verbringen einer Klinke aus der Bereitschaftsstellung über die Arbeitsstellung hinaus verhindert, und vorteilhafterweise einen zweiten Anschlag, der ein Verbringen einer Klinke aus der Bereitschaftsstellung über die Ruhestellung hinaus verhindert. Insbesondere können die Aussparungen auch als Führung für das jeweilige Stützelement ausgebildet sein, insbesondere als Kulissenführung.

Insbesondere ist vorgesehen, dass die Seitenwangen des Klinkenträgers in definierten Abständen jeweils eine Aussparung aufweisen, wobei hierdurch der Mindestabstand zwischen zwei aufeinanderfolgenden Klinken, der mit dem verwendeten Klinkenträger nicht unterschritten werden kann, festgelegt wird. Durch entsprechende Ausgestaltung der Hebelelemente, insbesondere eine entsprechende Länge des jeweiligen zweiten Hebelabschnitts, kann dieser Klinkenträger dabei aber für größere Abstände zwischen aufeinanderfolgenden Klinken verwendet werden, wobei dabei jede n-te Aussparung, beispielsweise jede zweite oder jede dritte Aussparung, nicht genutzt wird. Vorteilhafterweise ist somit eine einfache Skalierbarkeit an unterschiedliche Bauteildicken als Lagergut gegeben, insbesondere ohne Austausch des Klinkenträgers und vorteilhafterweise unter Verwendung derselben Klinken bei reduzierter Anzahl der Klinken.

Eine weiter vorteilhafte Ausführungsform der Stapelsäule sieht vor, dass der erste Hebelabschnitt und der zweite Hebelabschnitt eines jeweiligen Hebelelements der Stapelsäule zueinander einen Winkel kleiner 180°, insbesondere kleiner 160°, einschließen. Insbesondere ist vorgesehen, dass der eingeschlossene Winkel größer 90 ° ist, insbesondere größer 100°. Der erste Hebelabschnitt und der zweite Hebelabschnitt verlaufen dabei insbesondere jeweils weitestgehend geradlinig und somit insbesondere krümmungsfrei. Insbesondere erstreckt sich der erste Hebelabschnitt in eine andere Erstreckungsrichtung als der zweite Hebelabschnitt. Vorteilhafterweise lassen sich hierdurch auch Abstände zwischen den Klinken realisieren, die größer sind, als die Gesamtlänge einer Klinke der Stapelsäule, insbesondere um ein Vielfaches größer als die Gesamtlänge einer Klinke der Stapelsäule. Bei einem vergleichsweise schlanken und somit kostengünstigen Design des Hebelelements ist es dabei vorteilhafterweise dennoch realisiert, dass eine Klinke, die von der Bereitschaftsstellung in die Arbeitsstellung verbracht wird, auf den ersten Hebelabschnitt eines nachfolgenden Hebelelements derart einwirkt, dass das nachfolgende Hebelelement eine Schwenkbewegung um die zweite Drehachse ausführt und das nachfolgende Hebelelement dabei mit dem zweiten Hebelabschnitt auf eine nachfolgende Klinke einwirkt, wodurch die nachfolgende Klinke aus der Ruhestellung in die Bereitschaftsstellung verbracht wird. Der erste Hebelabschnitt und der zweite Hebelabschnitt liegen vorteilhafterweise auf der gleichen Seite in Bezug auf die zweite Drehachse, um die ein jeweiliges Hebelelement verschwenkbar ist.

Gemäß einer weiteren vorteilhaften Ausgestaltung der Stapelsäule ist vorgesehen, dass die Hebelelemente der Stapelsäule einen dritten Hebelabschnitt aufweisen. Der dritte Hebelabschnitt durchragt dabei vorteilhafterweise jeweils ein Langloch in einer hinteren Wand des Klinkenträgers, wobei das Langloch die Verschwenkbarkeit eines jeweiligen Hebelelements begrenzt. Die hintere Wand des Klinkenträgers weist dabei zumindest eine der Anzahl der Hebelelemente entsprechende Anzahl von Langlöcher auf. Insbesondere sind die Seitenwangen des Klinkenträger über die hintere Wand miteinander verbunden. Der dritte Hebelabschnitt ist in Bezug auf die zweite Drehachse vorteilhafterweise auf der dem ersten Hebelabschnitt und dem zweiten Hebelabschnitt gegenüberliegenden Seite angeordnet, sodass der dritte Hebelabschnitt einerseits und der erste Hebelabschnitt zusammen mit dem zweiten Hebelabschnitt andererseits bezüglich der zweiten Drehachse einen zweiseitigen Hebel bilden. Vorzugsweise durchragt der dritte Hebelabschnitt das Langloch nur zu einem kleinen Teil, insbesondere um wenige Millimeter, weiter insbesondere um 1 mm bis zu 20 mm (mm: Millimeter).

Insbesondere ist vorgesehen, dass die hintere Wand des Klinkenträgers in definierten Abständen jeweils ein Langloch aufweist, wobei hierdurch der Mindestabstand zwischen zwei aufeinanderfolgenden Klinken, der mit dem verwendeten Klinkenträger nicht unterschritten werden kann, festgelegt wird. Durch entsprechende Ausgestaltung der Hebelelemente, insbesondere eine entsprechende Länge des jeweiligen zweiten Hebelabschnitts, kann dieser Klinkenträger dabei aber für größere Abstände zwischen aufeinanderfolgenden Klinken verwendet werden, wobei dabei jedes n-te Langloch, beispielsweise jedes zweite oder jedes dritte Langloch, nicht genutzt wird. Vorteilhafterweise ist somit eine einfache Skalierbarkeit der Stapelsäule an unterschiedliche Bauteildicken als Lagergut gegeben, insbesondere ohne Austausch des Klinkenträgers und vorteilhafterweise unter Verwendung derselben Klinken bei reduzierter Anzahl der Klinken.

Erfindungsgemäß ist vorgesehen, dass der Klinkengrundkörper eine erste Hebelkontaktierungsfläche, zur Kontaktierung des ersten Hebelabschnitts, aufweist. Diese erste Hebelkontaktierungsfläche ist vorteilhafterweise auf der Oberseite des Klinkengrundkörpers, insbesondere außerhalb des Aufnahmeabschnitts. Weiter ist diese erste Hebelkontaktierungsfläche bezüglich einer Längserstreckungsrichtung des Klinkengrundkörpers asymmetrisch ausgebildet. Dabei weist die erste Hebelkontaktierungsfläche eine gegenüber einer Breite des Aufnahmeabschnitts des Klinkengrundkörpers verringerte Breite auf. Insbesondere weist die erste Hebelkontaktierungsfläche mit einer Seite des Klinkengrundkörpers eine gemeinsame Kante auf. Insbesondere weist die Oberfläche des Klinkengrundkörpers dabei eine L-förmigen Grundriss auf. Erfindungsgemäß weisen bei der Stapelsäule die Klinken im Wechsel jeweils einen Klinkengrundkörper, dessen erste Hebelkontaktierungsfläche bezüglich einer rechten Seite des Klinkengrundkörpers eine verringerte Breite hat, und einen Klinkengrundkörper, dessen erste Hebelkontaktierungsfläche bezüglich einer linken Seite des Klinkengrundkörpers eine verringerte Breite hat, auf. Vorteilhafterweise wird hierdurch Material eingespart. Zudem wird mehr Raum für die Bewegung der Hebelelemente geschaffen.

Weiter vorteilhaft ist vorgesehen, dass das an einem jeweiligen Klinkengrundkörper angeordnete Masseelement zumindest teilweise unterhalb der ersten Hebelkontaktierungsfläche angeordnet ist. Weiter vorteilhaft ist an der Unterseite der Klinke, insbesondere des Klinkengrundkörpers, eine zweite Hebelkontaktierungsfläche zur Kontaktierung des zweiten Hebelabschnitts vorgesehen. Insbesondere ist die zweite Hebelkontaktierungsfläche unterhalb der ersten Hebelkontaktierungsfläche angeordnet.

Der erste Hebelabschnitt weist vorteilhafterweise entsprechend eine erste Kontaktierungsstelle auf und der zweite Hebelabschnitt eine zweite Kontaktierungsstelle auf. Bei aufeinanderfolgenden Hebelelementen ist dabei vorteilhafterweise im Wechsel die erste Kontaktierungsstelle an einer ersten Seite des ersten Hebelabschnitts sowie die zweite Kontaktierungsstelle an einer zweiten Seite des zweiten Hebelabschnitts angeordnet und die erste Kontaktierungsstelle an einer zweiten Seite des ersten Hebelabschnitts sowie die zweite Kontaktierungsstelle an einer ersten Seite des zweiten Hebelabschnitts angeordnet. Die Kontaktierungsstellen sind dabei insbesondere durch seitlich in den jeweiligen Hebelabschnitt eingebrachte Kontaktierungselemente, insbesondere durch eingebrachte Schrauben, gebildet. Insofern können die Hebelelemente vorteilhaferweise für einen bestimmten Klinkenabstand zunächst gleich hergestellt werden. Bei jedem zweiten Hebelelement sind dann allerdings die Kontaktierungselemente von einer jeweils anderen Seite eingebracht.

Eine weitere vorteilhafte Ausführungsform der Stapelsäule weist eine Trägerplatte und eine an der Trägerplatte angeordnete Trägersäule auf. Der Klinkenträger ist dabei vorteilhafterweise an der Trägersäule angeordnet, insbesondere lösbar angeordnet, beispielsweise mittels einer Verschraubung, sodass vorteilhafterweise ein einfacher Austausch eines Klinkenträgers ermöglicht ist. Besonders vorteilhaft umfasst die Trägerplatte einen Vierkanthalter zur Halterung eines Vierkantrohrs als Trägersäule, wobei der Klinkenträger vorteilhafterweise an dem Vierkantrohr angeordnet ist. Bedarfsweise kann der Klinkenträger zusätzlich an dem Vierkantrohr gesichert werden, insbesondere durch eine Verschraubung. Die Trägerplatte ist vorzugsweise eine Bodenplatte, wobei die Bodenplatte insbesondere ein Brennteil mit großzügig ausgebrannten Schraubbohrungen und vorgebrannten Stiftbohrungen ist.

Ein ebenfalls erfindungsgemäß vorgeschlagenes Puffersystem zur Halterung von Lagergütern umfasst wenigstens zwei erfindungsgemäß ausgebildete Stapelsäulen, die insbesondere die vorstehend beschriebenen Merkmale einzeln oder in Kombination aufweisen können. Insbesondere ist ein Puffersystem mit vier erfindungsgemäß ausgebildeten Stapelsäulen vorgesehen. Je nach Beschaffenheit des zu lagernden Lagerguts können aber insbesondere auch noch mehr Stapelsäulen vorgesehen sein. Auch wenn Puffersysteme mit horizontal oder diagonal angeordneten Stapelsäulen vorgesehen sein können, sind insbesondere Puffersysteme mit vertikal angeordneten Stapelsäulen vorgesehen. Für die Montage der Stapelsäulen zu einem Puffersystem ist insbesondere vorgesehen, dass die Stapelsäulen zunächst auf einer Grundplatte grob ausgerichtet werden. Dann wird vorteilhafterweise ein zu stapelndes Bauteil eingelegt und danach werden die Stapelsäulen vorteilhafterweise feinjustiert. Dies ist besonders vorteilhaft bei der Ausführungsform der Stapelsäulen mit der Trägerplatte. Eine jeweilige Stapelsäule kann dann vorteilhafterweise mit der Trägerplatte an das Bauteil angeschoben werden, bis nur noch ein minimal erforderlicher Abstand zur Freigängigkeit gegeben ist. Wenn die Stapelsäulen auf diese Weise geeignet positioniert sind, werden die Trägerplatten vorteilhafterweise mit Schrauben mit der gemeinsamen Grundplatte festgezogen und vorteilhafterweise die vorgebrannten Stiftlöcher zusammen mit der Grundplatte durchbohrt und aufgerieben.

Vorteilhafterweise ermöglicht die erfindungsgemäße Ausgestaltung der Stapelsäule eine einfache Anpassung eines solchen Puffersystems, insbesondere eine Anpassung im Falle einer schadhaften Stapelsäule oder an eine veränderte Bauteildicke eines zu lagernden Bauteils. Das dazu erfindungsgemäß vorgeschlagene Verfahren zur Anpassung eines Puffersystems, insbesondere zur Anpassung eines Puffersystems an veränderte Lagerbedingungen, sieht vor, dass zur Anpassung die Anzahl der Klinken eines Klinkenträgers variiert wird und/oder zumindest ein Klinkenträger einer Stapelsäule gegen einen anderen Klinkenträger mit veränderten Abmessungen ausgetauscht wird. Insbesondere werden dabei dank des erfindungsgemäß vorgesehenen Aufbaus der Stapelsäulen und des erfindungsgemäß vorgesehenen Aufbaus des Puffersystems die folgenden Vorteile realisiert: Gewährleistung einer schnellen und montagefreundlichen Austauschbarkeit einzelner Klinken bei Beschädigung oder Fehlfunktion; Gewährleistung einer schnellen und montagefreundlichen Austauschbarkeit einzelner Stapelsäulen; Realisierung unterschiedlicher Stapelabstände durch modularen Aufbau der Stapelsäule; Möglichkeit der Feinjustierung der einzelnen Stapelsäulen auf einer gemeinsamen Grundplatte bei der Bildung eines Puffersystems, wodurch eine optimalen Anstellung der Stapelsäulen an das Lagergut erreicht werden kann.

Insbesondere sieht das Verfahren vor, einzelne Klinken einer Stapelsäule gezielt auszubauen und auszutauschen. Dazu sind insbesondere an dem Klinkenträger vorteilhafterweise angebrachte Abdeckbleche und Voreinweiserbleche zu demontieren, insbesondere abzuschrauben. Vorteilhafterweise kann dann, insbesondere mit einem Austreiber, die Stange, die die Drehachse für eine Klinke bildet, nach einer Seite ausgeschlagen werden, und die Klinke ausgebaut und ausgetauscht werden. Wenn an einer neuen Klinke bereits ein Masseelement anmontiert ist, verkürzt sich der Austausch vorteilhafterweise weiter. Produktionsstillstände werden dadurch vorteilhafterweise deutlich reduziert.

Weiter vorteilhaft sieht das Verfahren vor, dass, insbesondere bei besonders sensiblen Anlagenbereichen, in denen keine langen Stillstandzeiten geduldet werden können, ganze Stapelsäulen ausgetauscht werden. Der Austausch einer kompletten und vorteilhafterweise mit Klinken vorbestückten Stapelsäule ist dabei vorteilhafterweise noch schneller möglich. Gemäß einer vorteilhaften Ausführungsform muss dazu lediglich das Vierkantrohr von der Trägerplatte abgeschraubt werden. Dann kann das Vierkantrohr samt Klinkenträger und gegebenenfalls vorhandenen Abdeck- und Voreinweiserblechen abgezogen werden. Die neue bestückte Stapelsäule wird dann vorteilhafterweise über einen Vierkanthalter übergestülpt, vorteilhafterweise verstiftet und verschraubt.

Eine besonders vorteilhafte Ausgestaltung des Verfahrens sieht vor, dass ein Abstand zwischen den Klinken durch Entnahme von wenigsten einer Klinke zwischen zwei Klinken und durch Entnahme der Hebelelemente zwischen den Klinken und durch Einsetzen eines Hebelelements mit größeren Abmessungen vergrößert wird. Eine weitere vorteilhafte Ausgestaltung des Verfahrens sieht vor, dass ein Abstand zwischen den Klinken, der größer ist als ein möglicher Mindestabstand, durch Entnahme des Hebelelements zwischen zwei Klinken und durch Einfügen wenigstens einer zusätzlichen Klinke zwischen den Klinken und durch Einfügen von Hebelelementen mit verringerter Abmessung zwischen jeweils zwei Klinken verringert wird. Diese vorteilhaften Anpassungen eines Puffersystems gehen insbesondere auf die den vorteilhaften Klinkenträger der Stapelsäule mit dessen modularem Aufbau zurück. Insbesondere sind Löcher und Schlitzes in dem Klinkenträger, die insbesondere für die Anordnung der Drehachsen und der Aussparungen zur Aufnahme der Stützelemente vorgesehen sind, auf den minimal möglichen Bauteilabstand ausgelegt. Der Klinkenträger kann somit vorteilhafterweise analog zum Vierkantrohr als Meterware hergestellt und auf Lager gelegt werden und nach gewünschter Gesamtlänge abgeschnitten werden. Je nach erforderlichem Stapelabstand werden vorteilhafterweise einige Positionen für Klinken oder Hebelelemente bei der Montage einfach freigelassen. Das heißt, nicht überall dort, wo Klinken montiert werden könnten, werden - sofern nicht der Mindestabstand gewünscht ist - tatsächlich welche montiert. Das ist vorteilhafterweise auch ein Grund dafür, warum es linke und rechte Klinkengrundkörper und somit auch Hebelelemente gibt. Bei geringen Stapelabständen können sich die Klinken und Hebelelemente trotz ihrer Nähe zueinander vorteilhafterweise kollisionsfrei aneinander vorbeibewegen.

Weitere vorteilhafte Einzelheiten, Merkmale und Ausgestaltungsdetails der Erfindung werden im Zusammenhang mit den in den Figuren (Fig.: Figur) dargestellten Ausführungsbeispielen näher erläutert. Dabei zeigt:
- Fig. 1a; Fig. 1b: in einer perspektivischen Darstellung einen Ausschnitt eines Ausführungsbeispiels für eine erfindungsgemäß ausgebildete Stapelsäule;
- Fig. 2a bis Fig. 2c: in verschiedenen Ansichten Details des Ausführungsbeispiels gemäß Fig. 1a und Fig. 1b;
- Fig. 3: in einer perspektivischen Darstellung einen Ausschnitt eines weiteren Ausführungsbeispiels für eine erfindungsgemäß ausgebildete Stapelsäule;
- Fig. 4: in einer perspektivischen Darstellung von schräg unten nach schräg oben ein Ausführungsbeispiel einer Klinke für eine erfindungsgemäß ausgebildete Stapelsäule;
- Fig. 5: in einer perspektivischen Darstellung ein Ausführungsbeispiel eines Hebelelements für eine erfindungsgemäß ausgebildete Stapelsäule;
- Fig. 6: in einer Seitenansicht einen Ausschnitt eines weiteren Ausführungsbeispiels für eine erfindungsgemäß ausgebildete Stapelsäule, wobei eine Seitenwange weggeschnitten ist;
- Fig. 7: in einer perspektivischen Darstellung ein Ausführungsbeispiel für das Zusammenwirken der Klinken und Hebelelemente einer erfindungsgemäß ausgebildeten Stapelsäule ohne Darstellung des Klinkenträgers;
- Fig. 8: in einer perspektivischen Darstellung ein weiteres Ausführungsbeispiel für eine erfindungsgemäß ausgebildete Stapelsäule;
- Fig. 9: in einer perspektivischen Draufsicht ein weiteres Ausführungsbeispiel für eine erfindungsgemäß ausgebildete Stapelsäule;
- Fig. 10: in einer perspektivischen Darstellung Details des Ausführungsbeispiels aus Fig. 9; und
- Fig. 11: in einer perspektivischen Darstellung ein Ausführungsbeispiel für ein erfindungsgemäß ausgebildetes Puffersystem.

In den verschiedenen Figuren sind gleiche Teile in der Regel mit den gleichen Bezugszeichen versehen und werden daher mitunter auch jeweils nur im Zusammenhang mit einer der Figuren erläutert.

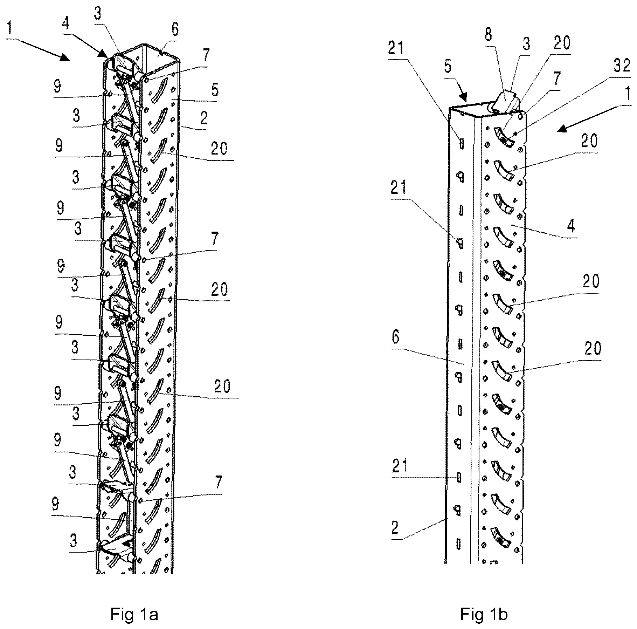

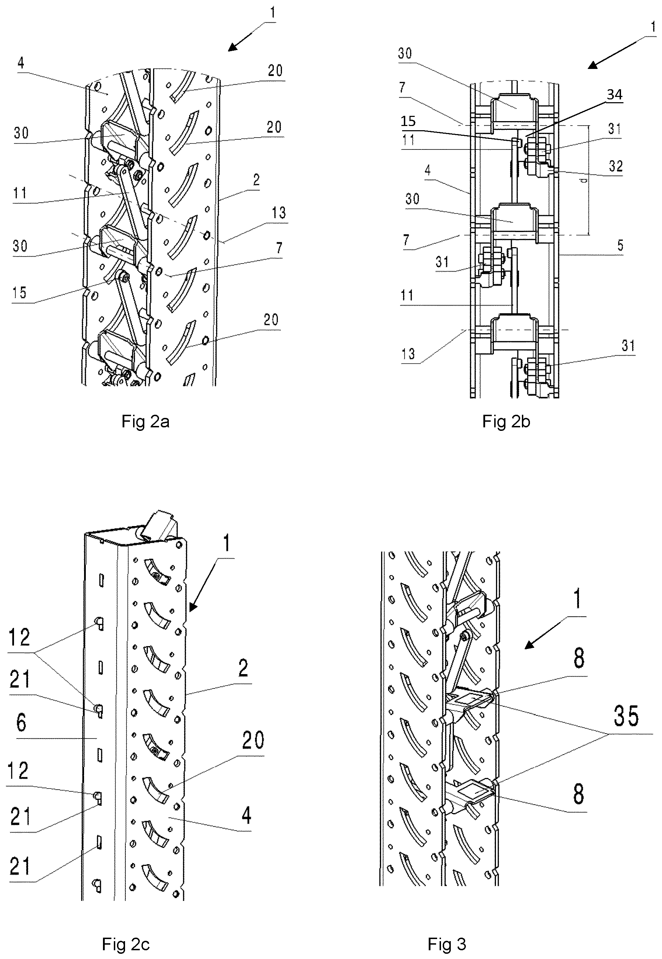

In Fig. 1a und Fig. 1b ist jeweils ein Ausschnitt eines Ausführungsbeispiels für eine senkrechte Stapelsäule 1 dargestellt, wobei der untere Teil der Stapelsäule 1, sowie eine Verkleidung des Klinkenträgers 2 der Stapelsäure in Fig. 1a und Fig. 1b nicht dargestellt sind. Fig. 1a zeigt dabei die Stapelsäule 1 von schräg vorne und Fig. 1b zeigt die Stapelsäule 1 von schräg hinten. Fig. 2a, Fig. 2b und Fig. 2c zeigen jeweils einen vergrößerten Ausschnitt des Ausführungsbeispiels aus Fig. 1a und Fig. 1b aus unterschiedlichen Perspektiven.

Die in diesen Figuren gezeigte Stapelsäule 1 weist einen einstückig ausgebildeten Klinkenträger 2 mit einer ersten Seitenwange 4, einer zweiten Seitenwange 5 und einer hinteren Wand 6 auf. In diesem Ausführungsbeispiel hat der Klinkenträger 2 einen rechteckigen Querschnitt. In dem Raum, den die erste Seitenwange 4, die zweite Seitenwange 5 und die hintere Wand 6 einschließen, ist eine Mehrzahl von Klinken 3 angeordnet, ohne dass eine mechanische Verbindung zwischen den einzelnen Klinken 3 existiert, über die die Klinken 3 miteinander gekoppelt wären. Die Klinken 3 sind in definierten Abständen aufeinanderfolgend angeordnet. Die Abstände sind in diesem Ausführungsbeispiel äquidistant, was sich in den meisten Fällen empfiehlt.

Zwischen zwei aufeinanderfolgenden Klinken 3 einer Stapelsäule 1 ist jeweils ein Hebelelement 9 angeordnet, dass mit den benachbarten Klinken 3 in Wirkverbindung steht, jedoch ohne mit diesen mechanisch fest verbunden zu sein. Die Klinken 3 sind jeweils mittels einer Stange zwischen der ersten Seitenwange 4 und der zweiten Seitenwange 5 angeordnet, wobei die Stange für die jeweilige Klinke 3 eine erste Drehachse 7 bildet, um die die jeweilige Klinke 3 verschwenkbar ist. Auch die Hebelelement 9 sind jeweils mittels einer Stange zwischen der ersten Seitenwange 4 und der zweiten Seitenwange 5 der Hebelelemente 9 angeordnet, wobei die Stange für das jeweilige Hebelelement 9 eine zweite Drehachse 13 bildet, um die das jeweilige Hebelelement 9 verschwenkbar ist.

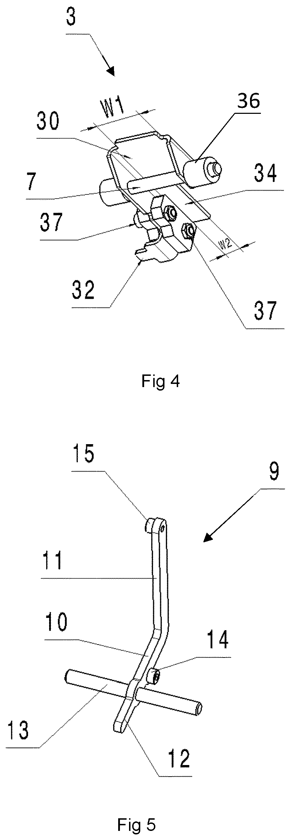

Ein besonders vorteilhaftes Ausführungsbeispiel einer Klinke 3 für eine erfindungsgemäß ausgebildete Stapelsäule 1 ist in Fig. 4 perspektivisch von schräg unten nach schräg oben dargestellt. Die Klinke 3 umfasst dabei einen Klinkengrundkörper 30, der insbesondere aus einem einteiligen Blechzuschnitt gebildet sein kann. Die Klinke 3 weist dabei zwei nach unten weisende Seitenwangen auf, durch die eine Stange als erste Drehachse 7 geführt ist. Auf den äußeren Enden der Stange, die die Seitenwangen des Klinkengrundkörpers 30 durchragen, sitzen dabei jeweils Distanzbuchsen 36 auf. Die Distanzbuchsen 36 dienen insbesondere zur mittigen Zentrierung der Klinke 3 im Klinkenträger 2. Die verbleibenden freien Enden der Stange sitzen bei montierter Klinke 3 in entsprechenden Öffnungen in den Seitenwangen 4, 5 des Klinkenträgers 2. Die Aufnahmefläche 8 liegt bezogen auf Fig. 4 vor der Drehachse 7 auf der Oberseite des Klinkengrundkörpers 30 und ist in Fig. 4 aufgrund der gewählten Perspektive nicht sichtbar.

Der Klinkengrundkörper 30 weist auf dessen Oberseite zudem eine erste Hebelkontaktierungsfläche 33 auf, die in Fig. 4 aufgrund der gewählten Perspektive ebenfalls nicht sichtbar ist. Die Hebelkontaktierungsfläche 33 ist bezüglich einer Längserstreckungsrichtung L des Klinkengrundkörpers 30 asymmetrisch ausgebildet und weist eine gegenüber einer Breite W1 des Aufnahmeabschnitts 8 verringerte Breite W2 auf. Bezogen auf die Darstellung in Fig. 4 ist die Breite W2 der Hebelkontaktierungsfläche 33 des Klinkengrundkörpers 30 bezüglich der rechten Seite des Klinkengrundkörpers 30 gegenüber der breite W1 der Aufnahmefläche 8 verringert. Dadurch ist auf der einen Seite des Klinkengrundkörpers 30 eine Aussparung gebildet. Bei einer Stapelsäule 1, wie insbesondere in Fig. 1a und Fig. 1b dargestellt, ist dabei vorgesehen, dass die Klinken 3 jeweils im Wechsel einen Klinkengrundkörper 30, dessen erste Hebelkontaktierungsfläche 33 bezüglich einer rechten Seite des Klinkengrundkörpers 30 eine verringerte Breite W2 aufweist, und einen Klinkengrundkörper 30, dessen erste Hebelkontaktierungsfläche 33 bezüglich einer linken Seite des Klinkengrundkörpers 30 eine verringerte Breite W2 aufweist, aufweisen.

An dem Klinkengrundkörper 30 ist zudem eine Masseelement 31 angeordnet. Das Masseelement 31 ist in diesem Ausführungsbeispiel, wie aus Fig. 4 ersichtlich, mehrteilig ausgebildet. Das Masseelement 31 ist dabei über eine Schraubverbindung 37 an einer Seitenwange des Klinkengrundkörpers 31 angeordnet. Eine Verlängerung der Seitenwange durchragt das Masseelement 31 und bildet ein seitliches Stützelement 32, wobei das Stützelement 32 dazu ausgebildet ist, in einer der beispielsweise in Fig. 1a und Fig. 1b dargestellten Aussparungen 20 einer der Seitenwangen 4, 5 des Klinkenträgers 2 angeordnet zu werden, und insbesondere geführt zu werden, wobei vorteilhafterweise das Stützelement 32 im Zusammenwirken mit dem jeweiligen Ende der Aussparung verhindert, dass die Klinke 3 ausgehend von der Bereitschaftsstellung über die Arbeitsstellung hinaus bewegt werden kann und ausgehend von der Bereitschafsstellung über die Ruhestellung hinaus bewegt werden kann.

Ein Teil des Masseelements 31 kann dabei unterhalb der ersten Hebelkontaktierungsfläche 33 angeordnet sein, mit der der Klinkengrundkörper 30 auf die erste Kontaktierungsstelle 14 eines Hebelelements 9 einwirken kann. Zudem weist der Klinkengrundkörper 30 an dessen Unterseite neben dem Masseelement 31 eine zweite Hebelkontaktierungsfläche 34 auf, auf die ein Hebelelement 9 mit dessen zweiter Kontaktierungsstelle 15 zum Verschwenken der Klinke 3 einwirken kann.

Ein besonders vorteilhaftes Ausführungsbeispiel eines Hebelelements 9 ist in Fig. 5 perspektivisch von schräg oben nach schräg unten dargestellt. Das Hebelelement 9 ist dabei auf einer Stange als zweite Drehachse 13 angeordnet. Davon ausgehend weist das Hebelelement einen ersten Hebelabschnitt 10 und einen dritten Hebelabschnitt 12 auf. An den ersten Hebelabschnitt 10 schließt sich zudem ein zweiter Hebelabschnitt 11 an, wobei der erste Hebelabschnitt 10 und der zweite Hebelabschnitt 11 in diesem Ausführungsbeispiel einen Winkel von etwa 115° einschließen. Die Abmessungen des ersten Hebelabschnitts 10 und des zweiten Hebelabschnitts 11 richtet sich dabei insbesondere nach dem Abstand d, den zwei aufeinanderfolgende Klinken 3 zueinander einnehmen sollen.

Der erste Hebelabschnitt 10 des Hebelelements 9 weist zudem eine erste Kontaktierungsstelle 14 auf, mit der das in dem Klinkenträger 2 schwenkbar um die zweite Drehachse 13 angeordnete Hebelelement 9 bei entsprechender Auslenkung die erste Hebelkontaktierungsfläche 33 einer Klinke 3 kontaktiert. Die Kontaktierungsstelle 14 wird in diesem Ausführungsbeispiel durch eine seitlich in den ersten Hebelabschnitt 10 eingebrachte Schraube gebildet. Ferner weist der zweite Hebelabschnitt 11 eine zweite Kontaktierungsstelle 15 auf, mit der das in dem Klinkenträger 2 schwenkbar um die zweite Drehachse 13 angeordnete Hebelelement 9 bei entsprechender Auslenkung die zweite Hebelkontaktierungsfläche 34 einer Klinke 3 kontaktiert. Die zweite Kontaktierungsstelle 15 wird in diesem Ausführungsbeispiel durch eine seitlich in den ersten Hebelabschnitt 10 eingebrachte Schraube gebildet, wobei die zweite Kontaktierungsstelle 15 und die erste Kontaktierungsstelle 14 jeweils auf unterschiedlichen Seiten der Hebelabschnitte 10, 11 angeordnet sind.

In Fig. 4 und Fig. 5 sind jeweils linke Baugruppen von Klinken 3 beziehungsweise Hebelelementen 9 dargestellt. Die rechten Baugruppen sind genau spiegelbildlich zu den linken ausgeführt. Linke und rechte Baugruppen sind dabei jeweils im Wechsel angeordnet.

Bei aufeinanderfolgend in einem Klinkenträger 2 angeordneten Hebelelementen 9, wie beispielsweise bei dem in Fig. 1a und Fig. 1b dargestellten Ausführungsbeispiel, sind im Wechsel die erste Kontaktierungsstelle 14 an einer ersten Seite des ersten Hebelabschnitts 10 sowie die zweite Kontaktierungsstelle 15 an einer zweiten Seite des zweiten Hebelabschnitts 11 angeordnet und die erste Kontaktierungsstelle 14 an einer zweiten Seite des ersten Hebelabschnitts 10 sowie die zweite Kontaktierungsstelle 15 an einer ersten Seite des zweiten Hebelabschnitts 11 angeordnet. Der erste Hebelabschnitt 10 und der zweite Hebelabschnitt 11 sind zudem jeweils nicht gekrümmt und weisen somit eine voneinander abweichende Erstreckungsrichtung auf. Der erste Hebelabschnitt 10 bildet dabei einen ersten Schenkel des Hebelelements 9 und der zweite Hebelabschnitt 11 bildet einen zweiten Schenkel des Hebelelements 9.

Die Hebelelemente 9 sind zudem gemäß dem in Fig. 1a und Fig. 1b gezeigten Ausführungsbeispiel derart in dem Klinkenträger angeordnet, dass der dritte Hebelabschnitt 12 eines jeweiligen Hebelelements 9 jeweils ein Langloch 21 in der hinteren Wand 6 des Klinkenträgers 2 durchragt, wobei das Langloch 21 die Verschwenkbarkeit eines jeweiligen Hebelelements 9 begrenzt. Wie in Fig. 1b ersichtlich, wird in dem Ausführungsbeispiel nur jedes zweite Langloch 21 von einem dritten Hebelabschnitt durchragt. Das liegt daran, dass die Klinken 3 nicht im Minimalabstand zueinander angeordnet sind. Darauf sind aber die Langlöcher 21 ausgerichtet, sodass eine einfache Anpassung der Klinkenabstände d realisierbar ist.

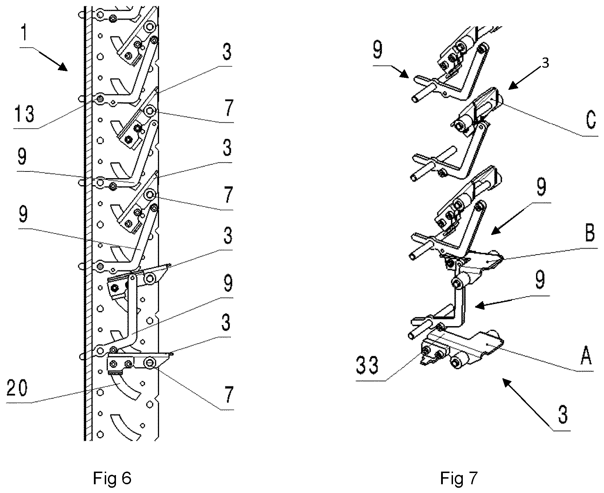

Die Klinken 3 und die Hebelelemente 9 sind bei dem in Fig. 1a und Fig. 1b gezeigten Ausführungsbeispiel jeweils derart verschwenkbar in dem Klinkenträger 2 angeordnet, dass die Klinken 3 jeweils eine Ruhestellung C, eine Bereitschaftsstellung B und eine Arbeitsstellung A einnehmen können, was beispielhaft in Fig. 6 und Fig. 7 gezeigt ist.

Fig. 6 zeigt dabei einen Ausschnitt eines Ausführungsbeispiels für eine erfindungsgemäß ausgebildete Stapelsäule 1, wobei die erste Seitenwand 4 des Klinkenträgers 2 in der Darstellung gemäß Fig. 6 weggeschnitten ist, um die Anordnung der Klinken 3 und der Hebelelemente 9 besser verständlich zu machen. In Fig. 7 ist aus diesem Grund vollständig von der Darstellung des Klinkenträgers 2 abgesehen worden.

Wie in Fig. 6 dargestellt, ist in der Ruhestellung C ein Aufnahmeabschnitt 8 einer Klinke 3, der zum Halten eines Lagerguts, insbesondere zum Halten eines Karosseriebauteils, ausgebildet ist, vollständig in dem Klinkenträger 2 angeordnet, in dem die Klinke 3 entsprechend um dessen Drehachse 7 verschwenkt ist. In der Bereitschaftsstellung B ragt der Aufnahmeabschnitt 8 einer Klinke 3 teilweise aus dem Klinkenträger 2 heraus, sodass von der Klinke ein beispielsweise mittels eines Industrieroboters eingebrachtes Lagergut von der Klinke 3 aufgenommen werden kann. Die Klinke 3 weist in der Bereitschaftsstellung B dabei einen gegenüber der Ruhestellung C entsprechend veränderten Schwenkwinkel auf. In der Arbeitsstellung A ist der Schwenkwinkel einer Klinke 3 weiter verändert, sodass der Aufnahmeabschnitt 8 einer jeweiligen in der Arbeitsstellung 8 befindlichen Klinke 3 vollständig aus dem Klinkenträger 2 herausragt und somit ein Lagergut auf dem Aufnahmeabschnitt 8 der Klinke 3 aufliegen kann und dabei von der Klinke gehalten wird. In diesem Ausführungsbeispiel ist die Klinke 3 und somit deren Aufnahmeabschnitt 8 horizontal ausgerichtet, was bei einer senkrechten Stapelsäule der Regelfall ist.

Die Hebelelemente 9 sind zwischen der ersten Seitenwange 4 und der zweiten Seitenwange 5 des Klinkenträgers 2 derart um die zweite Drehachse 13 verschwenkbar angeordnet, dass eine Klinke 3, die, insbesondere durch das Aufnehmen eines Lagergutes, von der Bereitschaftsstellung B in die Arbeitsstellung A verbracht wird, mit der ersten Hebelkontaktierungsfläche 33 auf die erste Kontaktierungsstelle 14 des ersten Hebelabschnitts 10 eines nachfolgenden Hebelelements 9, also eines oberhalb der Klinke 3 angeordneten Hebelelements 9, einwirkt. Die Einwirkung erfolgt dabei derart, dass das nachfolgende Hebelelement 9 eine Schwenkbewegung um die zweite Drehachse 13 ausführt und das nachfolgende Hebelelement 9 dabei mit der zweiten Kontaktierungsstelle 15 des zweiten Hebelabschnitts 11 auf eine nachfolgende Klinke 3, also eine oberhalb des nachfolgenden Hebelelements 9 angeordnete Klinke 3 einwirkt. Dadurch wird die nachfolgende Klinke 3 aus der Ruhestellung C in die Bereitschaftsstellung B verbracht.

Das an dem Klinkengrundkörper 31 einer Klinke 3 angeordnete Masseelement 31 ist nun derart ausgebildet und an dem Klinkengrundkörper 30 angeordnet ist, dass es die zugehörige Klinke 3 von der Arbeitsstellung A in die Bereitschaftsstellung B verbringt, wenn ein von dem Aufnahmeabschnitt 8 der Klinke 3 gehaltenes Lagergut 40 entfernt wird. Das Hebelelement 9, welches mit der ersten Kontaktierungsstelle 14 die erste Hebelkontaktierungsfläche 34 der Klinke 3 kontaktiert, wird dabei ebenfalls verschwenkt, wodurch die zweite Kontaktierungsstelle 15 die zweite Hebelkontaktierungsfläche 35 der darüber angeordneten Klinke 3 nicht mehr kontaktiert. Aufgrund des Masseelements 31 dieser Klinke 3, wird diese Klinke 3 von der Bereitschaftsstellung B in die Ruhestellung C verbracht. Das an dem Klinkengrundkörper 31 einer Klinke 3 angeordnete Masseelement 31 ist zudem derart ausgebildet und an dem Klinkengrundkörper 30 angeordnet, dass es die zugehörige Klinke 3 in einem beladungsfreien Zustand in der Ruhestellung C hält. Durch das in einer Aussparung 20 des Klinkenträgers 2 angeordnete, an einem jeweiligen Klinkengrundkörper 30 angeordnete Stützelement 32 wird zudem verhindert, dass eine Klinke 3 von der Bereitschaftsstellung B kommend über die Ruhestellung C hinaus verschwenkt wird, und dass eine Klinke 3 von der Bereitschaftsstellung B kommend über die Arbeitsstellung A hinaus verschwenkt wird.

In Fig. 3 ist eine Ausgestaltungsvariante für eine erfindungsgemäß ausgebildete Stapelsäule gezeigt, wobei auf die Aufnahmeabschnitte 8 der Klinken 3 jeweils ein Verschleißschutz 35 angeordnet ist. Durch diese werden die Klinken 3 verbessert vor Verschleiß durch das zu lagernde Lagergut geschützt, insbesondere wenn die Kanten und/oder Oberflächen des Lagerguts unbehandelt und insbesondere nicht entgratet sind.

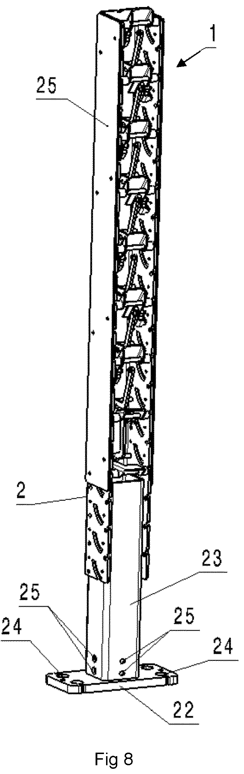

In Fig. 8 ist ein weiteres Ausführungsbeispiel für eine erfindungsgemäß ausgebildete Stapelsäule 1 gezeigt. Der Klinkenträger 2 kann dabei insbesondere wie unter Bezugnahme auf Fig. 1a und Fig. 1b erläutert ausgebildet sein. Die Stapelsäule 1 weist zudem eine Trägerplatte 22 und eine an der Trägerplatte 22 angeordnete Trägersäule 23 auf, wobei der Klinkenträger 2 an der Trägersäule 23 angeordnet ist, insbesondere durch Verschraubung. An dem oberen Teil des Klinkenträgers 2 ist zudem ein Abdeckblech 25 angeordnet. Das Abdeckblech 25 verhindert ein seitliches Herausfallen der die Drehachsen 7, 13 bildenden Stangen der Klinkenbaugruppen und der Hebelbaugruppen.

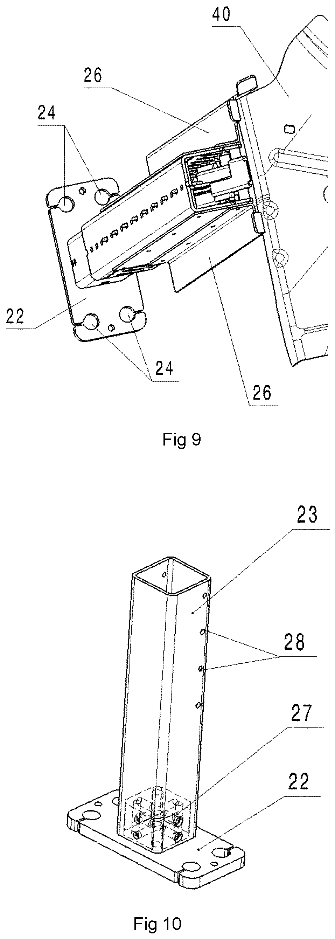

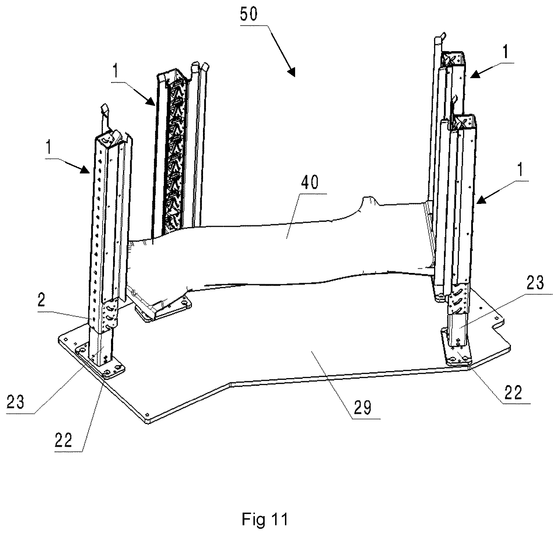

Details der Trägerplatte 22 und der Trägersäule 23 sind in Fig. 9 vergrößert dargestellt. Wie in Fig. 9 gezeigt, ist die Trägersäule 23 in diesem Ausführungsbeispiel ein Vierkantrohr, wobei das Vierkantrohr auf einem auf der Trägerplatte 22 angeordneten Vierkanthalter 27 aufgesteckt ist. Die Trägersäule 23 weist zudem Bohrungen 28 auf, über die der Klinkenträger 2 mit Schrauben fixiert werden kann. Die Trägerplatte 22 weist zudem Bohrungen 24 auf, mit denen die Stapelsäule 1 zur Bildung eines Puffersystems 50, wie in Fig. 11 beispielhaft gezeigt, auf einer Grundplatte 29 angeschraubt werden kann.

Das in Fig. 11 gezeigte Puffersystem 50 zur Halterung von Lagergütern 40, insbesondere von Karosseriebauteilen, umfasst vier Stapelsäulen 1, wie in Fig. 10 aus einer Draufsicht gezeigt. Die Stapelsäulen 1 sind dabei jeweils mit einer Trägerplatte 22 auf einer Grundplatte 29 aufgeschraubt. Die Stapelsäulen 1 weisen zudem an den Seitenwangen 4, 5 des Klinkenträgers 2 Abdeckbleche 25, wie in Fig. 8 gezeigt, auf, wobei an den Abdeckblechen jeweils ein Voreinweiserblech 26 angeordnet ist. Die Voreinweiserbleche 26 fungieren einerseits beim Einlegen des Lagerguts 40 in das Puffersystem 50 als Voreinweiser. Zudem erfüllen die Voreinweiserbleche 26 den Zweck, die einzelnen Teile des Lagergutes 40 gegen Herausrutschen in eine Richtung abzusichern.

Das in Fig. 11 gezeigte Puffersystems 50 kann einfach an veränderte Lagerbedingungen angepasst werden, indem die Anzahl der Klinken 3 eines Klinkenträgers 2 variiert wird. Eine weitere Anpassungsmöglichkeit besteht darin, den Klinkenträger 2 einer Stapelsäule 1 gegen einen anderen Klinkenträger 2 auszutauschen, beispielsweise im Schadensfall. Es können aber auch sämtliche Klinkenträger 2 des Puffersystems 50 gegen Klinkenträger mit veränderten Abmessungen ausgetauscht werden, um das Puffersystems 50 an veränderte Lagerbedingungen anzupassen. Beispielsweise können längere Klinkenträger vorgesehen werden, wenn eine größere Menge von Lagergut von dem Puffersystems 50 zwischengelagert können werden soll.

Dank der Ausgestaltung der Klinkenträger 2 mit auf einen Mindestabstand ausgerichteten Anzahl von Aussparungen 20, Langlöchern 21 und Aufnahmen für die als Drehachsen 7, 13 fungierenden Stangen, kann zudem ein Abstand zwischen den Klinken 3 einer Stapelsäule 1 des Puffersystems 50 vergrößert werden, indem eine gewünschte Anzahl von Klinken 3 zwischen zwei Klinken 3 entnommen wird, eine entsprechenden Anzahl von Hebelelementen 9 zwischen den Klinken 3 entnommen wird und Hebelelemente 9 mit größeren Abmessungen in den Klinkenträger 2 eingesetzt werden.

Entsprechend kann ein Abstand zwischen den Klinken 3 verringert werden durch Entnahme der Hebelelemente 9 zwischen jeweils zwei Klinken 3 und Einfügen einer gewünschten und möglichen Anzahl zusätzlicher Klinken 3 zwischen den Klinken 3 und Einfügen von Hebelelementen 9 mit verringerter Abmessung zwischen jeweils zwei Klinken 3.

Die in den Figuren dargestellten und im Zusammenhang mit diesen erläuterten Ausführungsbeispiele dienen der Erläuterung der Erfindung und sind für diese nicht beschränkend.

### Bezugszeichenliste

- 1: Stapelsäule
- 2: Klinkenträger
- 3: Klinke
- 4: erste Seitenwange
- 5: zweite Seitenwange
- 6: hintere Wandung
- 7: erste Drehachse
- 8: Aufnahmeabschnitt
- 9: Hebelelement
- 10: erster Hebelabschnitt
- 11: zweiter Hebelabschnitt
- 12: dritter Hebelabschnitt
- 13: zweite Drehachse
- 14: erste Kontaktierungsstelle
- 15: zweite Kontaktierungsstelle
- 20: Aussparung
- 21: Langloch
- 22: Trägerplatte
- 23: Trägersäule
- 24: Bohrung
- 25: Abdeckblech
- 26: Voreinweiserblech
- 27: Vierkanthalter
- 28: Bohrung
- 29: Grundplatte
- 30: Klinkengrundkörper
- 31: Masseelement
- 32: Stützelement
- 33: erste Hebelkontaktierungsfläche
- 34: zweite Hebelkontaktierungsfläche
- 35: Verschleißschutz
- 36: Distanzbuchse
- 37: Schraubverbindung
- 40: Lagergut
- 50: Puffersystem
- A: Arbeitsstellung
- B: Bereitschaftsstellung
- C: Ruhestellung
- L: Längserstreckungsrichtung eines Klinkengrundkörpers (30)
- d: Abstand zwischen zwei aufeinanderfolgenden Klinken (3)
- W1: Breite des Aufnahmeabschnitts
- W2: Breite der Hebelkontaktierungsfläche (33)

## Patentansprüche

1. Stapelsäule (1) umfassend einen Klinkenträger (2) und eine Mehrzahl von in definierten Abständen aufeinanderfolgend angeordneten Klinken (3),
die derart zwischen einer ersten Seitenwange (4) und einer zweiten Seitenwange (5) des Klinkenträgers (2) um eine erste Drehachse (7) verschwenkbar angeordnet sind, dass die Klinken (3) jeweils eine Ruhestellung (C), eine Bereitschaftsstellung (B) und eine Arbeitsstellung (A) einnehmen können,
wobei in der Ruhestellung (C) ein Aufnahmeabschnitt (8) einer Klinke (3) vollständig in dem Klinkenträger (2) angeordnet ist,
in der Bereitschaftsstellung (B) der Aufnahmeabschnitt (8) teilweise aus dem Klinkenträger (2) zur Aufnahme eines Lagerguts (40) herausragt, und
in der Arbeitsstellung (A) der Aufnahmeabschnitt (8) vollständig aus dem Klinkenträger (2) zum Halten eines Lagerguts (40) herausragt,
wobei jeweils zwischen zwei aufeinanderfolgenden Klinken (3) zwischen der ersten Seitenwange (4) und der zweiten Seitenwange (5) Hebelelemente (9) angeordnet sind,
die jeweils einen ersten Hebelabschnitt (10) und einen zweiten Hebelabschnitt (11) aufweisen,
wobei die Hebelelemente (9) derart um eine zweite Drehachse (13) verschwenkbar angeordnet sind, dass
eine Klinke (3), die von der Bereitschaftsstellung (B) in die Arbeitsstellung (A) verbracht wird, auf den ersten Hebelabschnitt (10) eines nachfolgenden Hebelelements (9) derart einwirkt, dass das nachfolgende Hebelelement (9) eine Schwenkbewegung um die zweite Drehachse (13) ausführt und das nachfolgende Hebelelement (9) dabei mit dem zweiten Hebelabschnitt (11) auf eine nachfolgende Klinke (3) einwirkt, wodurch die nachfolgende Klinke (3) aus der Ruhestellung (C) in die Bereitschaftsstellung (B) verbracht wird,
wobei die Klinken (3) einen Klinkengrundkörper (30) umfassen, an dem ein Masseelement (31) angeordnet ist, wobei das Masseelement (31) derart ausgebildet und an dem Klinkengrundkörper (30) angeordnet ist, dass das Masseelement (31) die zugehörige Klinke (3) in einem beladungsfreien Zustand in der Ruhestellung (C) hält,
**dadurch gekennzeichnet, dass**
der Klinkengrundkörper (30) eine erste Hebelkontaktierungsfläche (33) zur Kontaktierung des ersten Hebelabschnitts (10) aufweist, die bezüglich einer Längserstreckungsrichtung (L) des Klinkengrundkörpers (30) asymmetrisch ausgebildet ist und eine gegenüber einer Breite des Aufnahmeabschnitts (8) verringerte Breite (W2) aufweist, wobei die Klinken (3) im Wechsel jeweils einen Klinkengrundkörper (30), dessen erste Hebelkontaktierungsfläche (33) bezüglich einer rechten Seite des Klinkengrundkörpers (30) eine verringerte Breite (W2) aufweist, und einen Klinkengrundkörper (30), dessen erste Hebelkontaktierungsfläche (33) bezüglich einer linken Seite des Klinkengrundkörpers (30) eine verringerte Breite (W2) aufweist, aufweisen.

2. Stapelsäule (1) nach Anspruch 1, **dadurch gekennzeichnet, dass** das Masseelement (31) weiter derart ausgebildet und an dem Klinkengrundkörper (30) angeordnet ist, dass das Masseelement (31) die zugehörige Klinke (3) von der Arbeitsstellung (A) in die Bereitschaftsstellung (B) verbringt, wenn ein von dem Aufnahmeabschnitt (8) gehaltenes Lagergut (40) entfernt wird.

3. Stapelsäule (1) nach Anspruch 1 oder Anspruch 2, **dadurch gekennzeichnet, dass** das Masseelement (31) weiter derart ausgebildet und an dem Klinkengrundkörper (30) angeordnet ist, dass das Masseelement (31) die zugehörige Klinke (3) von der Bereitschaftsstellung (B) in die Ruhestellung (C) verbringt, wenn ein von dem Aufnahmeabschnitt (8) einer vorhergehenden Klinke (3) gehaltenes Lagergut (40) entfernt wird.

4. Stapelsäule (1) nach einem der Ansprüche 1 bis 3, **dadurch gekennzeichnet, dass** die Klinken (3) jeweils ein seitliches Stützelement (32) umfassen, wobei das Stützelement (32) in einer Aussparung (20) einer der Seitenwangen (4, 5) angeordnet ist, und wobei die Aussparung (20) und das Stützelement (32) insbesondere derart aufeinander abgestimmt sind, dass die Aussparung (20) ein Verschwenken einer Klinke (3) über die Arbeitsstellung (A) hinaus verhindert.

5. Stapelsäule (1) nach einem der vorstehenden Ansprüche, **dadurch gekennzeichnet, dass** der erste Hebelabschnitt (10) und der zweite Hebelabschnitt (11) eines Hebelelements (9) zueinander einen Winkel kleiner 180° einschließen, wobei der erste Hebelabschnitt (10) und der zweite Hebelabschnitt (11) insbesondere jeweils geradlinig verlaufen.

6. Stapelsäule (1) nach einem der vorstehenden Ansprüche, **dadurch gekennzeichnet, dass** die Hebelelemente (9) einen dritten Hebelabschnitt (12) aufweisen, wobei der dritte Hebelabschnitt (12) jeweils ein Langloch (21) in einer hinteren Wand (6) des Klinkenträgers (2) durchragt, wobei das Langloch (21) die Verschwenkbarkeit eines jeweiligen Hebelelements (9) begrenzt.

7. Stapelsäule (1) nach einem der vorstehenden Ansprüche, **dadurch gekennzeichnet, dass** das Masseelement (31) zumindest teilweise unterhalb der ersten Hebelkontaktierungsfläche (33) angeordnet ist und der Klinkengrundkörper (30) an dessen Unterseite eine zweite Hebelkontaktierungsfläche (34) zur Kontaktierung des zweiten Hebelabschnitts (11) aufweist.

8. Stapelsäule (1) nach einem der vorstehenden Ansprüche, **dadurch gekennzeichnet, dass** der erste Hebelabschnitt (10) eine erste Kontaktierungsstelle (14) aufweist und der zweite Hebelabschnitt (11) eine zweite Kontaktierungsstelle (15) aufweist, wobei bei aufeinanderfolgenden Hebelelementen (9) im Wechsel die erste Kontaktierungsstelle (14) an einer ersten Seite des ersten Hebelabschnitts (10) sowie die zweite Kontaktierungsstelle (15) an einer zweiten Seite des zweiten Hebelabschnitts (11) angeordnet ist und die erste Kontaktierungsstelle (14) an einer zweiten Seite des ersten Hebelabschnitts (10) sowie die zweite Kontaktierungsstelle (15) an einer ersten Seite des zweiten Hebelabschnitts (11) angeordnet ist.

9. Stapelsäule (1) nach einem der vorstehenden Ansprüche, **gekennzeichnet durch** eine Trägerplatte (22) und eine an der Trägerplatte (22) angeordnete Trägersäule (23), wobei der Klinkenträger (2) an der Trägersäule (23) angeordnet ist.

10. Stapelsäule (1) nach Anspruch 9, **dadurch gekennzeichnet, dass** die Trägersäule (23) ein Vierkantrohr ist, wobei das Vierkantrohr auf einem auf der Trägerplatte angeordneten Vierkanthalter aufgesteckt ist.

11. Puffersystem (50) zur Halterung von Lagergütern (40), **gekennzeichnet durch** wenigstens zwei Stapelsäulen (1) gemäß einem der vorstehenden Ansprüche,

12. Verfahren zur Anpassung eines Puffersystems (50) nach Anspruch 11, insbesondere zur Anpassung eines Puffersystems an veränderte Lagerbedingungen, **dadurch gekennzeichnet, dass** die Anzahl der Klinken (3) eines Klinkenträgers (2) variiert wird und/oder zumindest ein Klinkenträger (2) einer Stapelsäule (1) gegen einen anderen Klinkenträger (2) mit veränderten Abmessungen ausgetauscht wird.

13. Verfahren nach Anspruch 12, **dadurch gekennzeichnet, dass** ein Abstand zwischen den Klinken (3) durch Entnahme von wenigsten einer Klinke (3) zwischen zwei Klinken (3) und Entnahme der Hebelelemente (9) zwischen den Klinken (3) und Einsetzen eines Hebelelements (9) mit größeren Abmessungen vergrößert wird; oder dass ein Abstand zwischen den Klinken (3) durch Entnahme des Hebelelements (9) zwischen zwei Klinken (3) und Einfügen wenigstens einer zusätzlichen Klinke (3) zwischen den Klinken (3) und Einfügen von Hebelelementen (9) mit verringerter Abmessung zwischen jeweils zwei Klinken (3) verringert wird.

## Claims

1. Stacking column (1) comprising a pawl carrier (2) and a plurality of pawls (3) arranged in succession at defined intervals,
which are arranged between a first side wall (4) and a second side wall (5) of the pawl carrier (2) so as to be pivotable about a first axis of rotation (7) in such a way that the pawls (3) can each assume a rest position (C), a ready position (B) and a working position (A),
wherein in the rest position (C), a receiving section (8) of a pawl (3) is arranged completely in the pawl carrier (2),
in the ready position (B), the receiving section (8) partially protrudes from the pawl carrier (2) for receiving a stored item (40), and
in the working position (A), the receiving section (8) projects completely out of the latch carrier (2) for holding a stored item (40),
wherein
lever elements (9) are arranged in each case between two successive pawls (3) between the first side wall (4) and the second side wall (5),
which each have a first lever section (10) and a second lever section (11),
wherein the lever elements (9) are arranged to be pivotable about a second axis of rotation (13) in such a way that
a pawl (3), which is moved from the ready position (B) into the working position (A), acts on the first lever section (10) of a subsequent lever element (9) in such a way that the subsequent lever element (9) executes a pivoting movement about the second axis of rotation (13) and the subsequent lever element (9) thereby acts with the second lever section (11) on a subsequent pawl (3), whereby the subsequent pawl (3) is moved from the rest position (C) into the ready position (B),
wherein the pawls (3) comprise a pawl base body (30) on which a mass element (31) is arranged, wherein the mass element (31) is designed and arranged on the pawl base body (30) in such a way that the mass element (31) holds the associated pawl (3) in a load-free state in the rest position (C),
**characterized in that** the pawl base body (30) has a first lever contacting surface (33) for contacting the first lever section (10), which is designed asymmetrically with respect to a longitudinal extension direction (L) of the pawl base body (30) and has a width (W2) which is reduced with respect to a width of the receiving section (8), wherein the pawls (3) alternately have a pawl base body (30) whose first lever contact surface (33) has a reduced width (W2) with respect to a right-hand side of the pawl base body (30), and a pawl base body (30) whose first lever contact surface (33) has a reduced width (W2) with respect to a left-hand side of the pawl base body (30).

2. Stacking column (1) according to claim 1, **characterized in that** the mass element (31) is further designed and arranged on the pawl base body (30) in such a way that the mass element (31) moves the associated pawl (3) from the working position (A) to the ready position (B) when a stored item (40) held by the receiving section (8) is removed.

3. Stacking column (1) according to claim 1 or claim 2, **characterized in that** the mass element (31) is further designed and arranged on the pawl base body (30) in such a way that the mass element (31) moves the associated pawl (3) from the ready section (B) to the rest position (C) when a stored item (40) held by the receiving portion (8) of a preceding pawl (3) is removed.

4. Stacking column (1) according to one of claims 1 to 3, **characterized in that** the pawls (3) each comprise a lateral support element (32), wherein the support element (32) is arranged in a recess (20) of one of the side walls (4, 5), and wherein the recess (20) and the support element (32) are matched to one another in particular in such a way that the recess (20) prevents a pawl (3) from pivoting beyond the working position (A).

5. Stacking column (1) according to one of the preceding claims, **characterized in that** the first lever section (10) and the second lever section (11) of a lever element (9) enclose an angle of less than 180° to each other, the first lever section (10) and the second lever section (11) in particular each extending in a straight line.

6. Stacking column (1) according to one of the preceding claims, **characterized in that** the lever elements (9) have a third lever section (12), the third lever section (12) in each case projecting through an elongated hole (21) in a rear wall (6) of the pawl carrier (2), the elongated hole (21) limiting the pivotability of a respective lever element (9).

7. Stacking column (1) according to one of the preceding claims, **characterized in that** the mass element (31) is arranged at least partially below the first lever contacting surface (33) and the pawl base body (30) has a second lever contacting surface (34) on its underside for contacting the second lever section (11).

8. Stacking column (1) according to one of the preceding claims, **characterized in that** the first lever section (10) has a first contacting point (14) and the second lever section (11) has a second contacting point (15), the first contacting point (14) being arranged on a first side of the first lever section (10) and the second contacting point (15) being arranged on a second side of the second lever section (11) and the first contacting point (14) being arranged on a second side of the first lever section (10) and the second contacting point (15) being arranged on a first side of the second lever section (11) in the case of successive lever elements (9) in alternation.

9. Stacking column (1) according to one of the preceding claims, **characterized by** a carrier plate (22) and a carrier column (23) arranged on the carrier plate (22), wherein the pawl carrier (2) is arranged on the carrier column (23).

10. Stacking column (1) according to claim 9, **characterized in that** the carrier column (23) is a square tube, the square tube being attached to a square holder arranged on the carrier plate.

11. Buffer system (50) for holding stored items (40), **characterized by** at least two stacking columns (1) according to one of the preceding claims.

12. Method for adapting a buffer system (50) according to claim 11, in particular for adapting a buffer system to changed storage conditions, **characterized in that** the number of pawls (3) of a pawl carrier (2) is varied and/or at least one pawl carrier (2) of a stacking column (1) is exchanged for another pawl carrier (2) with changed dimensions.

13. Method according to claim 12, **characterized in that** a distance between the pawls (3) is increased by removing at least one pawl (3) between two pawls (3) and removing the lever elements (9) between the pawls (3) and inserting a lever element (9) with larger dimensions; or **in that**
a distance between the pawls (3) is reduced by removing the lever element (9) between two pawls (3) and inserting at least one additional pawl (3) between the pawls (3) and inserting lever elements (9) with reduced dimensions between two pawls (3) in each case.

## Revendications

1. Colonne d'empilage (1) comprenant un support de cliquets (2) et une pluralité de cliquets (3) disposés les uns à la suite des autres à des distances définies,
qui sont disposés de manière à pouvoir pivoter autour d'un premier axe de rotation (7) entre une première joue latérale (4) et une deuxième joue latérale (5) du support de cliquets (2) de telle sorte que les cliquets (3) peuvent prendre chacun une position de repos (C), une position d'attente (B) et une position de travail (A),
dans la position de repos (C), une section de réception (8) d'un cliquet (3) est entièrement disposée dans le support de cliquets (2),
dans la position d'attente (B), la section de réception (8) dépasse partiellement du support de cliquets (2) pour recevoir un produit stocké (40), et
dans la position de travail (A), la section de réception (8) dépasse complètement du support de cliquets (2) pour maintenir un produit stocker (40),
des éléments de levier (9) sont respectivement disposés entre deux cliquets (3) successifs entre la première joue latérale (4) et la deuxième joue latérale (5),
qui présentent chacun une première section de levier (10) et une deuxième section de levier (11),
les éléments de levier (9) étant disposés de manière à pouvoir pivoter autour d'un deuxième axe de rotation (13) de telle sorte que
un cliquet (3), qui est amené de la position d'attente (B) à la position de travail (A), agit sur la première section de levier (10) d'un élément de levier suivant (9) de telle sorte, que l'élément de levier suivant (9) effectue un mouvement de pivotement autour du deuxième axe de rotation (13) et que l'élément de levier suivant (9) agit alors avec la deuxième section de levier (11) sur un cliquet suivant (3), ce qui fait que le cliquet suivant (3) est amené de la position de repos (C) dans la position d'attente (B),
les cliquets (3) comprenant un corps de base de cliquet (30) sur lequel est disposé un élément de masse (31), l'élément de masse (31) étant conçu et disposé sur le corps de base de cliquet (30) de telle sorte que l'élément de masse (31) maintient le cliquet associé (3) dans la position de repos (C) dans un état sans charge, et
**caractérisé en ce que** le corps de base de cliquet (30) présentant une première surface de contact de levier (33) pour la mise en contact du premier section de levier (10), qui est réalisée de manière asymétrique par rapport à une direction d'extension longitudinale (L) du corps de base de cliquet (30) et présente une largeur (W2) réduite par rapport à une largeur de la section de réception (8) , les cliquets (3) présentant en alternance respectivement un corps de base de cliquet (30), dont la première surface de contact de levier (33) présente une largeur réduite (W2) par rapport à un côté droit du corps de base de cliquet (30), et un corps de base de cliquet (30), dont la première surface de contact de levier (33) présente une largeur réduite (W2) par rapport à un côté gauche du corps de base de cliquet (30).

2. Colonne d'empilage (1) selon la revendication 1, **caractérisée en ce que** l'élément de masse (31) est en outre conçu et disposé sur le corps de base de cliquet (30) de telle sorte que l'élément de masse (31) déplace le cliquet associé (3) de la position de travail (A) à la position d'attente (B) lorsqu'un produit stocké (40) maintenu par la section de réception (8) est enlevé.

3. Colonne d'empilage (1) selon la revendication 1 ou la revendication 2, **caractérisée en ce que** l'élément de masse (31) est en outre conçu et disposé sur le corps de base de cliquet (30) de telle sorte que l'élément de masse (31) déplace le cliquet associé (3) de la position d'attente (B) à la position de repos (C) lorsqu'un produit stocké (40) maintenu par la section de réception (8) d'un cliquet précédent (3) est retiré.

4. Colonne d'empilage (1) selon l'une des revendications 1 à 3, **caractérisée en ce que** les cliquets (3) comprennent chacun un élément d'appui latéral (32), l'élément d'appui latéral (32) étant disposé dans un évidement (20) de l'une des joues latérales (4, 5), et l'évidement (20) et l'élément d'appui (32) étant notamment adaptés l'un à l'autre de telle sorte que l'évidement (20) empêche un pivotement d'un cliquet (3) au-delà de la position de travail (A).

5. Colonne d'empilage (1) selon l'une des revendications précédentes, **caractérisée en ce que** la première section de levier (10) et la deuxième section de levier (11) d'un élément de levier (9) forment entre elles un angle inférieur à 180°, la première section de levier (10) et la deuxième section de levier (11) s'étendant en particulier chacune en ligne droite.

6. Colonne d'empilage (1) selon l'une des revendications précédentes, **caractérisée en ce que** les éléments de levier (9) présentent une troisième section de levier (12), la troisième section de levier (12) traversant respectivement un trou oblong (21) dans une paroi arrière (6) du support de cliquets (2), le trou oblong (21) limitant la capacité de pivotement d'un élément de levier respectif (9).

7. Colonne d'empilage (1) selon l'une des revendications précédentes, **caractérisée en ce que** l'élément de masse (31) est disposé au moins partiellement en dessous de la première surface de contact de levier (33) et le corps de base de cliquet (30) présente sur sa face inférieure une deuxième surface de contact de levier (34) pour la mise en contact de la deuxième section de levier (11).

8. Colonne d'empilage (1) selon l'une des revendications précédentes, **caractérisée en ce que** la première section de levier (10) présente un premier point de contact (14) et la deuxième section de levier (11) présente un deuxième point de contact (15), dans lequel, lorsque des éléments de levier (9) se succèdent en alternance, le premier point de contact (14) est disposé sur un premier côté de la première section de levier (10) ainsi que le deuxième point de contact (15) est disposé sur un deuxième côté de la deuxième section de levier (11), et le premier point de contact (14) est disposé sur un deuxième côté de la première partie de levier (10) et le deuxième point de contact (15) est disposé sur un premier côté de la deuxième partie de levier (11).

9. Colonne d'empilage (1) selon l'une des revendications précédentes, **caractérisée par** une plaque de support (22) et une colonne de support (23) disposée sur la plaque de support (22), le support de cliquets (2) étant disposé sur la colonne de support (23).

10. Colonne d'empilage (1) selon la revendication 9, **caractérisée en ce que** la colonne de support (23) est un tube carré, le tube carré étant emboîté sur un support carré disposé sur la plaque de support.

11. Système tampon (50) pour le maintien de produit stockés (40), **caractérisé par** au moins deux colonnes d'empilage (1) selon l'une des revendications précédentes.

12. Procédé d'adaptation d'un système tampon (50) selon la revendication 11, en particulier pour l'adaptation d'un système tampon à des conditions de stockage modifiées, **caractérisé en ce que** le nombre de cliquets (3) d'un support de cliquets (2) est modifié et/ou au moins un support de cliquets (2) d'une colonne d'empilage (1) est échangé contre un autre support de cliquets (2) de dimensions modifiées.

13. Procédé selon la revendication 12, **caractérisé en ce qu'une** distance entre les cliquets (3) est augmentée en retirant au moins un cliquet (3) entre deux cliquets (3) et en retirant les éléments de levier (9) entre les cliquets (3) et en insérant un élément de levier (9) de plus grandes dimensions; ou **en ce que**
une distance entre les cliquets (3) est réduite en retirant l'élément de levier (9) entre deux cliquets (3) et en insérant au moins un cliquet supplémentaire (3) entre les cliquets (3) et en insérant des éléments de levier (9) de dimensions réduites entre chaque fois deux cliquets (3).
